# FASCICULE DE BREVET EUROPEEN

(11) **EP 3 143 338 B1**
(45) Date de publication et mention de la délivrance du brevet: **25.03.2020**
(21) Numéro de dépôt: 15750641.1
(22) Date de dépôt: 15.05.2015
(51) Int. Cl.: F24D 17/00, E03C 1/044, F28D 21/00, E03C 1/00

(54) **DISPOSITIF DE DISTRIBUTION D'EAU CHAUDE SANITAIRE**
VORRICHTUNG ZUR WARMWASSERVERTEILUNG IN HAUSHALTEN
DEVICE FOR DOMESTIC HOT WATER DISTRIBUTION

(30) Priorité: 15.05.2014 FR 1454347
(43) Date de publication de la demande: 22.03.2017
(73) Titulaire: Quantia SAS, 13100 Aix-en-Provence (FR)
(72) Inventeur: COLLINI, Arnold, 13013 Marseille (FR); IERMANN, Florent, F-13100 Aix en Provence (FR); GORMEZANO, Gabriel, 13880 Velaux (FR); NUTI, Pascal, F-13590 Meyreuil (FR)
(74) Mandataire: Vigand, Philippe
(86) Numéro de dépôt international: PCT/EP2015/060775
(87) Numéro de publication internationale: WO 2015/173400

(56) Documents cités:
- EP-A2- 0 985 888
- WO-A1-2008/068500
- WO-A1-2011/091756
- WO-A2-2012/160330
- DE-A1- 3 919 543
- GB-A- 2 442 801
- JP-A- S6 053 735
- US-A- 4 398 308

## Description

La présente invention concerne de manière générale un dispositif de distribution d'eau chaude sanitaire, et en particulier un échangeur de chaleur agencé pour récupérer de la chaleur contenue dans des eaux usées, et transférer cette chaleur à l'eau qui doit être distribuée.

Il est connu dans l'art antérieur des dispositifs de distribution d'eau chaude intégrant un récupérateur de chaleur, tel que celui décrit par exemple dans le document US 4 821 793. Ce document divulgue une douche comprenant un échangeur eau-eau à serpentin pour opérer une récupération de l'énergie des eaux usées. En contrepartie, ce système présente notamment l'inconvénient d'être encombrant et peu efficace pour récupérer une grande quantité de chaleur.

Par ailleurs, le document US2009242005A1 divulgue un lave vaisselle équipé de modules Peltier pour chauffer l'eau de nettoyage du lave vaisselle. Ce système n'est pas adapté à la production d'eau chaude sanitaire en raison des domaines de température concernés. En effet, dans un lave vaisselle, l'eau est chauffée jusqu'à 85°C, ce qui totalement incompatible avec l'utilisation pour une douche par exemple. Il en résulte une perte d'efficacité importante et il faudrait même prévoir un refroidissement de l'eau produite par ce système pour utiliser l'eau à des fins sanitaires.

Le document FR 2 486 060 décrit une installation de traitement des eaux usées d'une habitation avec une unité de récupération de chaleur. En contrepartie, le dispositif de ce document requiert une réserve d'eau chaude importante (un ballon d'eau chaude), ce qui complique notablement l'installation complète. De plus, après une longue période d'inutilisation, l'utilisateur doit attendre que l'eau chaude remplisse les tuyaux d'alimentation avant d'être effectivement distribuée au robinet.

Le document FR 2 982 012 divulgue un dispositif de distribution d'eau chaude sanitaire avec un échangeur de chaleur. Ce système présente l'inconvénient de nécessiter un temps d'amorçage minimal avant de pouvoir distribuer de l'eau réellement chaude, ce qui peut gêner l'utilisateur qui doit soit attendre l'eau chaude, soit commencer à se laver avec de l'eau à peine tiède.

Le document GB 2 442 801 A divulgue un ensemble de douche électrique, c'est-à-dire un dispositif de distribution d'eau chaude avec un échangeur de chaleur et un chauffage électrique dans une réserve d'eau séparée de l'échangeur. Le document JP S 6053735 A montre un échangeur de chaleur selon le préambule de la revendication 1.

Un but de la présente invention est de répondre aux inconvénients des documents de l'art antérieur mentionnés ci-dessus et en particulier, tout d'abord, de proposer un dispositif de distribution d'eau chaude sanitaire avec un échangeur de chaleur de récupération d'énergie, sans réserve tampon (sans ballon d'eau chaude), et qui permet de distribuer très rapidement de l'eau chaude.

L'invention est définie par la revendication 1. Un aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
et en ce que l'échangeur de chaleur comprend des deuxièmes moyens de chauffage agencés pour maintenir, pendant une période sans distribution d'eau, la portion d'échange eau propre et l'eau qui y est contenue à une température au moins égale ou supérieure à la première température.

L'échangeur de chaleur selon la présente mise en oeuvre permet d'être intégré dans un dispositif de distribution d'eau chaude sans ballon d'eau chaude, car les premiers moyens de chauffage permettent de chauffer l'eau à la deuxième température, qui est celle désirée par l'utilisateur. Par exemple, la deuxième température est au minimum égale à 35°C. Idéalement, la deuxième température est au minimum égale à 40°C. De plus, la distribution d'eau chaude est immédiate, même après une longue période d'inutilisation, car les deuxièmes moyens de chauffage maintiennent à la première température l'eau qui est contenue dans la portion d'échange eau propre, ce qui maintient le système constamment amorcé. On comprend donc que les deuxièmes moyens de chauffage sont agencés pour chauffer la portion d'échange eau propre. Le dispositif est alors particulièrement simple, et ne requiert qu'une seule alimentation en eau froide pour distribuer de l'eau chaude, tout en pouvant fournir de l'eau chaude très rapidement. En d'autres termes, l'échangeur selon la présente invention permet une alimentation en eau chaude même sans ballon d'eau chaude, ni circuit domestique en eau chaude, et avec le maintien en température, il est constamment amorcé. On comprend que l'invention concerne un échangeur qui intègre les premiers et deuxièmes moyens de chauffage et qu'il est en connexion directe avec la pomme de douche ou le robinet de distribution (c'est-à-dire sans moyen de chauffage intermédiaire entre échangeur et pomme de douche). Finalement, l'échangeur selon la présente mise en oeuvre sert de moyen de chauffage unique pour délivrer de l'eau chaude sanitaire.

Avantageusement, les premiers moyens de chauffage et/ou les deuxièmes moyens de chauffage sont agencés pour chauffer directement l'échangeur de chaleur.

Avantageusement, les premiers moyens de chauffage et/ou les deuxièmes moyens de chauffage sont agencés pour chauffer directement au moins une paroi de l'échangeur de chaleur.

Avantageusement, les premiers moyens de chauffage et/ou les deuxièmes moyens de chauffage sont agencés pour chauffer directement au moins une paroi de la portion d'échange eau propre.

Avantageusement, les premiers moyens de chauffage et/ou les deuxièmes moyens de chauffage sont en contact avec au moins la paroi de la portion d'échange eau propre.

Selon l'invention, les premiers moyens de chauffage et/ou les deuxièmes moyens de chauffage entourent au moins partiellement la portion d'échange eau propre.

Avantageusement, l'échangeur comprend un boîtier d'isolation thermique qui contient au moins la portion d'échange eau propre, et les premiers moyens de chauffage et/ou les deuxièmes moyens de chauffage sont contenus dans le boîtier d'isolation thermique.

Avantageusement, les premiers moyens de chauffage et/ou les deuxièmes moyens de chauffage sont contenus dans la portion d'échange eau propre.

Avantageusement, les premiers moyens de chauffage et les deuxièmes moyens de chauffage sont électriques. Selon cette mise en œuvre, il n'y a besoin que d'une prise électrique en plus de l'alimentation en eau froide, pour obtenir de l'eau chaude.

Avantageusement, les premiers moyens de chauffage sont une pompe à chaleur. Cette mise en oeuvre permet d'augmenter l'efficacité globale du système. On peut envisager une pompe à chaleur du type géothermie ou aérothermie avec dans tous les cas un fluide caloporteur à changement de phase.

Avantageusement, les premiers moyens de chauffage sont des module thermoélectriques, ou modules Peltier. On peut alors envisager un fonctionnement en pompe à chaleur.

Selon l'invention, les premiers moyens de chauffage sont une résistance électrique agencée pour produire une énergie d'au moins 3 kWh lorsqu'elle est alimentée avec un premier courant d'alimentation, et les deuxièmes moyens de chauffage comprennent un potentiomètre relié en série avec la résistance électrique, pour limiter le premier courant d'alimentation et faire produire une énergie d'au plus 30Wh à la résistance électrique. Cette mise en œuvre est économique, car il n'y a qu'un seul élément résistif qui fonctionne selon deux modes distincts, en fonction selon que de l'eau est distribuée ou non. Une prise de courant délivrant 16 ampères suffit pour alimenter le système, et avec un échangeur de chaleur qui récupère 80% de la chaleur des eaux usées (eau grise), le dispositif complet présente un COP au moins égal à 3, et permet de délivrer de l'eau chaude à 35°C au moins avec un débit de 6.5 litres par minute. Autrement dit, les premiers moyens de chauffage et les deuxièmes moyens de chauffage ont la résistance électrique en commun. Ce qui les différencie, c'est le potentiomètre qui appartient aux deuxièmes moyens de chauffage pour réguler la puissance de la résistance électrique.

Avantageusement, la portion d'échange eau grise et la portion d'échange eau propre forment un échangeur de chaleur à plaques, en flux inversé. Idéalement, l'échangeur de chaleur à plaques comporte au moins 80 plaques par portion d'échange.

En alternative, les premiers moyens de chauffage sont une source de chaleur fonctionnant au gaz, ou au fioul.

Avantageusement, l'échangeur de chaleur comprend des moyens d'isolation thermiques agencés pour isoler thermiquement au moins la portion d'échange eau propre. Cette mise en œuvre limite les pertes d'énergie et limite le besoin en énergie pour maintenir la portion d'échange eau propre à la première température.

Avantageusement, les moyens d'isolation thermique comprennent au moins un manchon en matière plastique entre une entrée et/ou une sortie de l'une de la portion d'échange eau grise ou de la portion d'échange eau propre. Cette mise en œuvre limite les pertes d'énergie par conduction thermique par les canalisations (traditionnellement en cuivre, bon conducteur).

Avantageusement, l'échangeur de chaleur comprend une pompe agencée pour accélérer de manière au moins temporaire un flux d'eau grise traversant la portion d'échange eau grise. La pompe selon cette mise en œuvre peut fonctionner selon de brèves périodes, afin de rendre l'écoulement turbulent dans la portion d'échange eau grise, pour augmenter l'efficacité d'échange. De plus, la pompe peut alors être utilisée pour évacuer les eaux usées, si la gravité ne peut être utilisée, en raison de contraintes d'encombrement.

Avantageusement, la pompe est une pompe aspirante à membrane. Selon cette mise en œuvre, on peut envisager installer un évier ou une douche même en dessous de la conduite d'évacuation, car la pompe aspirante peut refluer les eaux grises sur quelques mètres de hauteur. On peut prévoir une pompe à membrane capable de générer une pression de 2.5 bars au moins.

Avantageusement, l'échangeur de chaleur comprend des moyens de filtration agencés en amont de la pompe. Les moyens de filtration peuvent comprendre des moyens de filtration de gros éléments, en série avec des moyens de filtration de petits éléments. Les moyens de filtration de gros éléments peuvent présenter une maille de 2 millimètres, et les moyens de filtration de petits éléments peuvent présenter une maille de 0.5 millimètres. Cela permet de protéger la pompe. On peut envisager d'installer ces moyens de filtration dans une cartouche dévissable pour effectuer un nettoyage aisé.

Alternativement, les moyens de filtration comprennent un filtre, un boîtier contenant le filtre, le boîtier comprenant une entrée agencée pour être connectée à la bonde de récupération des eaux grises, une sortie agencée pour alimenter la portion d'échange eau grise, le filtre étant agencé entre l'entrée et la sortie, le boîtier comprenant en outre une sortie de nettoyage agencée du même côté du filtre que l'entrée, et l'échangeur comprend une vanne de nettoyage connectant la sortie de nettoyage à la conduite d'évacuation et dont l'ouverture provoque un nettoyage du filtre. Cette mise en œuvre permet un auto nettoyage du filtre. Le filtre peut être un filtre à cartouche filtrante agencée pour stopper les particules d'une taille supérieure à 100 microns par exemple.

Avantageusement, l'échangeur de chaleur comprend une dérivation agencée pour diviser un flux en sortie de la portion d'échange eau propre et en faire passer une partie au contact des premiers moyens de chauffage, et faire passer une autre partie en parallèle des premiers moyens de chauffage. Cette mise en œuvre permet de s'adapter aux premiers moyens de chauffage qui peuvent être limités en débit en raison d'une construction standard.

Avantageusement, l'échangeur de chaleur comprend des moyens de régulation des premiers moyens de chauffage agencés pour réguler une puissance de chauffage en fonction d'un débit de distribution d'eau. Le système ne consomme alors que ce qui est nécessaire au confort de l'utilisateur. Ce n'est pas un fonctionnement tout ou rien.

Avantageusement, la portion d'échange eau propre comprend deux sorties, l'échangeur de chaleur comprend des moyens de mesure de débit pour chacune des deux sorties et les moyens de régulation des premiers moyens de chauffage sont agencés pour réguler une puissance de chauffage, en fonction d'au moins un débit d'une des sorties de la portion d'échange eau propre. Selon cette mise en œuvre, l'échangeur de chaleur est apte à réguler une puissance de chauffe, donc une température d'eau, sur l'indication d'au moins un des débits d'une des sorties de la portion d'échange eau propre. En conséquence, il n'y a pas besoin de mélanger de l'eau chaude avec de l'eau froide pour régler la température avec un certain débit global, mais l'échangeur selon la présente invention permet d'adapter la puissance de chauffe en fonction d'une information de débit d'au moins une sortie de la portion d'échange eau propre.

Avantageusement, les moyens de mesure de débit comprennent deux débitmètres, chacun agencé pour mesurer le débit d'une des deux sorties de la portion d'échange eau propre.

Avantageusement, l'échangeur de chaleur comprend le robinet de distribution qui est un robinet mitigeur avec deux entrées chacune reliée à l'une des sorties de la portion d'échange eau propre, et une sortie délivrant l'eau sanitaire à un utilisateur. Selon cette mise en œuvre, le robinet de distribution est un simple mitigeur mécanique, avec pour l'utilisateur une position eau chaude et une position eau froide. Toutefois, les deux entrées du mitigeur sont directement reliées à la portion d'échange eau propre, mais si l'utilisateur règle le mitigeur sur la position eau chaude, alors le débitmètre associé à cette entrée mesurera 100% du débit passant par une première entrée, et les moyens de régulation donneront l'ordre aux premiers moyens de chauffage de fonctionner à pleine puissance. Par contre, si l'utilisateur règle le mitigeur sur la position eau froide, les débitmètres donneront l'information que 100% du débit passe par l'autre entrée du mitigeur et alors les moyens de régulation couperont le fonctionnement des premiers moyens de chauffage, ce qui fera baisser la température de l'eau distribuée. Ainsi l'utilisateur va continuer à utiliser son mitigeur de manière traditionnelle, comme s'il mélangeait de l'eau chaude et de l'eau froide, mais l'échangeur selon la présente invention va au cependant réguler la puissance de chauffe en fonction du débit de chacune des entrées du mitigeur.

Avantageusement, l'échangeur comprend des moyens de commande de la pompe agencés pour commander la pompe en fonction des débits mesurés à chacune des sorties de la portion d'échange eau propre.

Avantageusement, chaque portion d'échange présente un volume interne inférieur à deux litres.

Avantageusement, la portion d'échange eau grise est directement reliée à la conduite d'évacuation, et se vide automatiquement. Cette mise en œuvre implique que la portion d'échange eau grise ne contient pas d'eau lors des périodes d'inutilisation, ce qui évite de maintenir des eaux grises à la première température, et qui seraient rejetées dès que le dispositif est à nouveau utilisé.

Avantageusement, l'échangeur de chaleur comprend des moyens de régulation de débit agencés pour réguler un débit d'évacuation d'eau grise hors de la portion d'échange eau grise en fonction d'un débit d'entrée d'eau grise dans la portion d'échange eau grise. Cette mise en œuvre permet d'éviter que le lavabo ou bac de douche alimenté ne se remplisse de manière intempestive.

Avantageusement, l'échangeur de chaleur comprend au moins une vanne agencée pour court-circuiter la portion d'échange eau grise d'un flux d'eau grise froid, et diriger ce flux court-circuité directement depuis la bonde vers la conduite d'évacuation. Cette mise en œuvre évite de désamorcer le dispositif si de l'eau froide est rejetée, l'eau froide ne passera pas par la portion d'échange eau grise.

Avantageusement, chaque portion d'échange présente deux extrémités,
l'échangeur comprend à chaque extrémité de chaque portion d'échange une vanne dont une voie est connectée à l'extrémité de sa portion d'échange,
et deux autres voies de chaque vanne d'une portion d'échange sont connectées au reste du circuit d'eau et à deux autres voies de la vanne de l'autre extrémité de la portion d'échange en question via des raccords en Té, pour pouvoir inverser les flux dans chaque portion d'échange. L'inversion de flux permet de désencrasser la portion d'échange eau grise, en provoquant un passage en sens inverse, et en inversant les entrées et sorties d'eau chaude. Cela permet de dissoudre des savons et/ou graisses et/ou matière biologique qui se seraient solidifiés, accolés ou sédimentés sur les parois de l'échangeur. Au minimum, les vannes en question sont des vannes trois voies.

Avantageusement, l'échangeur de chaleur comprend, en aval des premiers moyens de chauffage, une vanne agencée pour diriger un flux d'eau chaude vers le robinet de distribution ou vers la portion d'échange eau grise. Cette mise en œuvre permet de faire passer de l'eau très chaude (en réduisant le débit et à pleine puissance des premiers moyens de chauffage) dans la portion d'échange eau grise, pour y dissoudre des savons solidifiés par exemple.

Avantageusement, l'échangeur de chaleur comprend des moyens de stockage de chaleur avec au moins un matériau à changement de phase. Cette mise en œuvre permet de limiter l'utilisation des deuxièmes moyens de chauffage, et d'augmenter la récupération d'énergie lors de la distribution d'eau, pour la restituer pendant le maintien en température, ou lors de la prochaine utilisation.

Un deuxième aspect de l'invention concerne un dispositif de distribution d'eau sanitaire comprenant :
- au moins un échangeur de chaleur selon l'une des revendications précédentes,
- un lavabo et/ou un bac de douche.

On peut envisager d'intégrer l'échangeur de chaleur selon le premier aspect dans un meuble de salle de bain ou de cuisine par exemple.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
et en ce que l'échangeur de chaleur comprend une pompe agencée pour accélérer au moins de manière temporaire un flux d'eau grise traversant la portion d'échange eau grise. La pompe selon cette mise en œuvre peut fonctionner selon de brèves périodes, afin de rendre l'écoulement turbulent dans la portion d'échange eau grise, pour augmenter l'efficacité d'échange thermique. De plus, la pompe peut alors être utilisée pour évacuer les eaux usées, si la gravité ne peut être utilisée, en raison de contraintes d'encombrement.

Avantageusement, la pompe est une pompe aspirante à membrane. Selon cette mise en œuvre, on peut envisager installer un évier ou une douche même en dessous de la conduite d'évacuation, car la pompe aspirante peut refluer les eaux grises sur quelques mètres de hauteur.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
en ce que l'échangeur de chaleur comprend une pompe agencée pour accélérer au moins de manière temporaire un flux d'eau grise traversant la portion d'échange eau grise,
et en ce que l'échangeur de chaleur comprend des moyens de filtration agencés en amont de la pompe. Les moyens de filtration peuvent comprendre des moyens de filtration de gros éléments, en série avec des moyens de filtration de petits éléments. Les moyens de filtration de gros éléments peuvent présenter une maille de 2 millimètres, et les moyens de filtration de petits éléments peuvent présenter une maille de 0.5 millimètres. Cela permet de protéger la pompe. On peut envisager d'installer ces moyens de filtration dans une cartouche dévissable pour effectuer un nettoyage aisé.

Alternativement, les moyens de filtration comprennent un filtre, un boîtier contenant le filtre, le boîtier comprenant une entrée agencée pour être connectée à la bonde de récupération des eaux grises, une sortie agencée pour alimenter la portion d'échange eau grise, le filtre étant agencé entre l'entrée et la sortie, le boîtier comprenant en outre une sortie de nettoyage agencée du même côté du filtre que l'entrée, et l'échangeur comprend une vanne de nettoyage connectant la sortie de nettoyage à la conduite d'évacuation et dont l'ouverture provoque un nettoyage du filtre. Cette mise en œuvre procure un auto nettoyage du filtre.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
et en ce que l'échangeur de chaleur comprend au moins une vanne agencée pour court-circuiter la portion d'échange eau grise d'un flux d'eau grise froid, et diriger ce flux court-circuité directement depuis la bonde vers la conduite d'évacuation. Cette mise en œuvre évite de désamorcer le dispositif si de l'eau froide est rejetée, l'eau froide ne passera pas par la portion d'échange eau grise et est directement rejetée vers la conduite d'évacuation.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
en ce que chaque portion d'échange présente deux extrémités,
en ce que l'échangeur comprend à chaque extrémité de chaque portion d'échange une vanne dont une voie est connectée à l'extrémité de sa portion d'échange,
et en ce que deux autres voies de chaque vanne d'une portion d'échange sont connectées au reste du circuit d'eau et à deux autres voies de la vanne de l'autre extrémité de la portion d'échange en question via des raccords en Té, pour pouvoir inverser les flux dans chaque portion d'échange. L'inversion de flux permet de désencrasser la portion d'échange eau grise, en provoquant un passage en sens inverse, et en inversant les entrées et sorties d'eau chaude. Cela permet de dissoudre des savons et/ou graisses et/ou matière biologique qui se seraient solidifiés, accolés ou sédimentés sur les parois de l'échangeur. Au minimum, les vannes en question sont des vannes trois voies.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
et en ce que l'échangeur de chaleur comprend, en aval des premiers moyens de chauffage, une vanne agencée pour diriger un flux d'eau chaude vers le robinet de distribution ou vers la portion d'échange eau grise. Cette mise en œuvre permet de faire passer de l'eau très chaude (en réduisant le débit et à pleine puissance des premiers moyens de chauffage) dans la portion d'échange eau grise, pour y dissoudre des savons solidifiés par exemple.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
et en ce que l'échangeur de chaleur comprend des moyens de stockage de chaleur avec au moins un matériau à changement de phase. Cette mise en œuvre permet de limiter l'utilisation des deuxièmes moyens de chauffage, et d'augmenter la récupération d'énergie lors de la distribution d'eau, pour la restituer pendant le maintien en température, ou lors de la prochaine utilisation.

Un autre aspect non couvert par les revendications concerne un échangeur de chaleur du type eau-eau comprenant :
- une portion d'échange eau grise agencée pour être connectée en amont à une bonde de récupération d'eaux usées sanitaires, et en aval à une conduite d'évacuation,
- une portion d'échange eau propre agencée pour être connectée en amont à un réseau d'alimentation en eau froide, et en aval à un robinet de distribution, l'échangeur de chaleur étant agencé pour effectuer un transfert de chaleur entre la portion d'échange eau grise et la portion d'échange eau propre lors d'une distribution d'eau provoquée par une ouverture du robinet de distribution, et chauffer ainsi une eau d'alimentation à une première température,
caractérisé en ce que l'échangeur de chaleur comprend des premiers moyens de chauffage agencés pour compléter le chauffage de l'eau d'alimentation simultanément à la distribution d'eau, pour chauffer l'eau d'alimentation à une deuxième température supérieure la première température,
en ce que la portion d'échange eau propre comprend deux sorties,
en ce que l'échangeur de chaleur comprend des moyens de mesure de débit pour chacune des deux sorties et des moyens de régulation de chauffage des premiers moyens de chauffage agencés pour réguler une puissance de chauffage, en fonction d'au moins un débit d'une des sorties de la portion d'échange eau propre. Selon cette mise en œuvre, l'échangeur de chaleur est apte à réguler une puissance de chauffe, donc une température d'eau, sur l'indication d'au moins un des débits d'une des sorties de la portion d'échange eau propre. En conséquence, il n'y a pas besoin de mélanger de l'eau chaude avec de l'eau froide pour régler la température avec un certain débit global, mais l'échangeur selon la présente invention permet d'adapter la puissance de chauffe en fonction d'une information de débit d'au moins une sortie de la portion d'échange eau propre.

Avantageusement, les moyens de mesure de débit comprennent deux débitmètres, chacun agencé pour mesurer le débit d'une des deux sorties de la portion d'échange eau propre.

Avantageusement, l'échangeur de chaleur comprend le robinet de distribution qui est un robinet mitigeur avec deux entrées chacune reliée à l'une des sorties de la portion d'échange eau propre, et une sortie délivrant l'eau sanitaire à un utilisateur. Selon cette mise en œuvre, le robinet de distribution est un simple mitigeur mécanique, avec pour l'utilisateur une position eau chaude et une position eau froide. Toutefois, les deux entrées du mitigeur sont directement reliées à la portion d'échange eau propre, mais si l'utilisateur règle le mitigeur sur la position eau chaude, alors le débitmètre associé à cette entrée mesurera 100% du débit passant par une première entrée du mitigeur, et les moyens de régulation donneront l'ordre aux premiers moyens de chauffage de fonctionner à pleine puissance. Par contre, si l'utilisateur règle le mitigeur sur la position eau froide, les débitmètres donneront l'information que 100% du débit passe par l'autre entrée du mitigeur et alors les moyens de régulation couperont le fonctionnement des premiers moyens de chauffage, ce qui fera baisser la température de l'eau distribuée. Ainsi l'utilisateur va continuer à utiliser son mitigeur de manière traditionnelle, comme s'il mélangeait de l'eau chaude et de l'eau froide, mais l'échangeur selon la présente invention va au cependant réguler la puissance de chauffe en fonction du débit de chacune des entrées du mitigeur.

Avantageusement, l'échangeur comprend des moyens de commande de la pompe d'évacuation, agencés pour commander la pompe en fonction des débits mesurés à chacune des sorties de la portion d'échange eau propre.

D'autres caractéristiques et avantages de la présente invention apparaîtront plus clairement à la lecture de la description détaillée qui suit d'un mode de réalisation de l'invention donné à titre d'exemple nullement limitatif et illustré par le dessin annexé, dans lequel :
- la figure 1 représente un schéma de principe de l'invention ;
- la figure 2 représente une variante du dispositif schématisé à la figure 1.

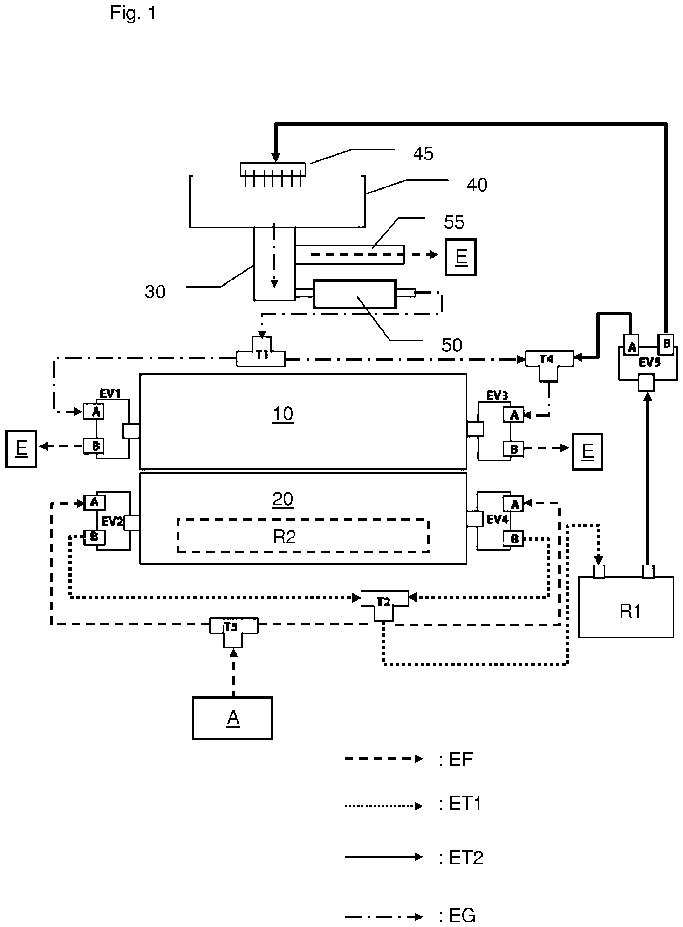

Dans le schéma de la figure 1, la convention de représentation suivante a été adoptée, comme explicité dans la légende de la figure 1 :
- les traits en grands pointillés représentent une conduite d'eau froide EF;
- les traits en petits pointillés représentent une conduite d'eau à une première température ET1 ;
- les traits continus représentent une conduite d'eau à une deuxième température ET2, la deuxième température étant supérieure à la première température ;
- les traits mixtes représentent une conduite d'eau grise EG.

La figure 1 représente un échangeur de chaleur selon la présente invention, qui comprend une portion d'échange eau grise 10, accolée à une portion d'échange eau propre 20.

D'une manière générale, l'échangeur de chaleur est alimenté en eau froide par une alimentation A, et rejette des eaux usées (eau grise) dans une conduite d'évacuation E, en ayant récupéré de la chaleur présente dans l'eau grise pour effectuer un premier chauffage à une première température de l'eau froide, et l'eau à la première température est ensuite chauffée à une deuxième température avant d'être distribuée. Ce fonctionnement en boucle fermée permet d'augmenter le coefficient de performance (COP), et de limiter la puissance nécessaire pour alimenter le dispositif. De plus, seul un point d'eau froide est nécessaire, ce qui simplifie notablement l'architecture d'un bâtiment équipé de dispositifs selon l'invention.

De plus, comme cela sera expliqué ci-dessous, l'échangeur de chaleur est prévu pour pouvoir inverser le sens d'écoulement de l'eau dans chacune de ses portions d'échange, et pour pouvoir injecter dans la portion d'échange eau grise 10 de l'eau chaude, tout cela à des fins de nettoyage des parois internes de l'échangeur de chaleur. A cet effet, chaque portion d'échange 10 et 20 est équipée à chacune de ses extrémités de vannes trois voies.

En ce qui concerne la portion d'échange eau propre 20, elle est raccordée à une première extrémité à une vanne trois voies EV2 et à une deuxième extrémité à une vanne trois voies EV4. Par ailleurs, chaque vanne trois voies EV2 et EV4 de la portion d'échange eau propre 20 comprend une voie A raccordée via un raccord en Té T3 à l'alimentation en eau froide A. Enfin, chaque vanne trois voies EV2 et EV4 de la portion d'échange eau propre 20 comprend une voie B raccordée via un raccord en Té T2 à une résistance électrique 31. En résumé, les voies A de chaque vanne trois voies EV2 et EV4 de la portion d'échange eau propre 20 peuvent alimenter cette dernière en eau froide, et les voies B de chaque vanne trois voies EV2 et EV4 de la portion d'échange eau propre 20 peuvent alimenter la résistance électrique R1 en eau à une première température.

Sur les figures, la résistance électrique R1 est représentée distincte de la portion eau propre 20, mais selon l'invention, elle fait partie de l'échangeur, elle peut donc être accolée à cette portion d'échange eau propre 20 ou même contenue dans cette dernière..

En ce qui concerne la portion d'échange eau grise 10, elle est raccordée à une première extrémité à une vanne trois voies EV1 et à une deuxième extrémité à une vanne trois voies EV3. Par ailleurs, chaque vanne trois voies EV1 et EV3 de la portion d'échange eau grise 10 comprend une voie A raccordée via un raccord en Té T1 à une bonde 30 de récupération d'eau grise d'un bac à douche ou d'un lavabo par exemple. Enfin, chaque vanne trois voies EV1 et EV3 de la portion d'échange eau grise 10 comprend une voie B raccordée à la conduite d'évacuation E. En résumé, les voies A de chaque vanne trois voies EV1 et EV3 de la portion d'échange eau grise 10 peuvent alimenter cette dernière en eau grise, et les voies B de chaque vanne trois voies EV1 et EV3 de la portion d'échange eau grise 10 peuvent conduire l'eau grise refroidie lors de son passage au travers de la portion d'échange eau grise 10 vers la conduite d'évacuation E.

Pour inverser le sens d'écoulement dans l'une de la portion d'échange eau grise 10 ou de la portion d'échange eau propre 20, il suffit d'inverser l'ouverture des voies A et B de chaque vanne trois voies de la portion d'échange concernée. Cela aura pour effet d'inverser la distribution de températures, et provoquer une dissolution ou un décollement de dépôts internes. Les parois restent propres, et on peut envisager d'inverser les sens d'écoulement ente chaque utilisation par exemple.

Afin d'améliorer l'efficacité de l'échange de chaleur entre les portions d'échange 10 et 20, une mise en œuvre préférée consiste à faire circuler l'eau dans les portions d'échange en sens inverse. Par exemple, si l'eau froide circule de la vanne trois voies EV4 vers la vanne trois voies EV2, alors l'eau grise devra circuler de la de la vanne trois voies EV1 vers la vanne trois voies EV3.

Une pompe 50 est installée entre la bonde 30 et la portion d'échange eau grise 10, pour deux raisons. Une activation temporaire de la pompe 50 peut aisément créer des conditions d'écoulement turbulent dans la portion d'échange eau grise 10, et ainsi augmenter l'efficacité de l'échange thermique. De plus, la pompe 50 peut être utilisée pour forcer l'évacuation de l'eau grise, si ce n'est pas possible par gravité.

Par ailleurs, une conduite 55 avec une vanne non représentée permet de diriger directement vers la conduite d'évacuation E le flux d'eau recueilli par la bonde 30, si l'eau est froide. Cela évite de refroidir inutilement les portions d'échange 10 et 20.

Lors de la distribution d'eau, l'eau froide est donc chauffée à une première température lors de son passage au travers de l'échangeur de chaleur, et ce dernier comprend des premiers moyens de chauffage (la résistance électrique R1) pour la chauffer à une deuxième température dite de confort, qui permet à l'utilisateur de se laver.

Afin de réduire le temps d'amorçage, l'invention propose d'implanter dans ou autour de la portion d'échange eau propre 20 des deuxièmes moyens de chauffage (une résistance électrique R2), pour maintenir l'eau contenue dans la portion d'échange eau propre 20 au moins à la première température, même lors de longues périodes d'inutilisation (d'un matin à l'autre par exemple). Ainsi, l'échangeur reste dans les mêmes conditions que celles lors d'un régime de distribution d'eau établi, et en début d'utilisation après ouverture du robinet de distribution (la vanne EV5 ici), le temps de distribution d'eau réellement chaude à une pomme de douche 45 est de quelques secondes, le temps pour l'eau de parcourir la distance (moins de 2 mètres) entre la portion d'échange eau propre 20 et la pomme de douche 45, en étant réchauffée à la deuxième température au passage de la résistance électrique R1.

Dans ces conditions de régime établi, une résistance électrique R1 pouvant délivrer une énergie de 3.6kW.h permet de faire fonctionner le dispositif en se branchant sur une simple prise de courant délivrant 16 ampères, et une résistance électrique R2 délivrant au plus 30W.h suffit à maintenir la portion d'échange eau propre 20 à la première température. Dans ces conditions, on obtient un COP de 3 au minimum avec un débit de 6.5 litres par minutes.

De manière avantageuse, une isolation thermique de la portion d'échange eau propre 20 permet de limiter les apports en énergie pour maintenir la portion d'échange eau propre 20 à la première température, et on peut envisager d'inclure dans l'échangeur un dispositif de stockage de chaleur avec un matériau à changement de phase par exemple, pour augmenter l'inertie thermique.

Un autre aspect de l'invention concerne le désencrassement de la portion d'échange eau grise 10. A cet effet, la portion d'échange eau grise 10 est équipée des vannes à trois voies EV1 et EV3, qui permettent d'inverser le sens d'écoulement. Cette action a pour effet de renverser la distribution des températures à l'intérieur de la portion d'échange eau grise 10, ce qui peut aider à dissoudre des savons, graisses ou particules biologiques et les entraîner vers la conduite d'évacuation E. Dans le même temps, on inversera également le sens du flux dans la portion d'échange eau propre 20.

En complément, l'échangeur comporte une vanne trois voies EV5 en aval de la résistance électrique R1, pour diriger le flux d'eau chaude vers la pomme de douche 45, ou bien vers la voie A de la vanne EV3 via un raccord en Té T4. Dans ce cas, on peut envisager de limiter le débit d'eau chaude pour que la résistance R1 chauffe l'eau au-delà de la deuxième température, à une troisième température qui peut être 75°C par exemple. Lorsque l'eau à la troisième température dirigée vers la portion d'échange eau grise 10 va y pénétrer, les dépôts vont être dissous et évacués vers la conduite d'évacuation E. On peut également envisager de libérer le débit de manière temporaire pour obtenir un flux sous pression importante et débit rapide qui va compléter le nettoyage de la portion d'échange eau grise 10. En effet, pour l'efficacité de l'échange thermique, il est important d'avoir la portion d'échange eau grise 10 aussi propre que possible.

Ces cycles de nettoyage peuvent être programmés par exemple en pleine nuit.

L'invention peut être aisément incorporée dans un volume de petite taille tel qu'un cube, lequel se présenterait comme une boîte avec uniquement une entrée en eau froide, une sortie en eau chaude, et une prise électrique. L'installation est alors particulièrement aisée, et permet de créer un point de distribution d'eau chaude, même dans les bâtiments ou endroits qui ne disposent pas de circuit d'eau chaude. Pour alimenter une douche avec un débit compris entre 6 et 7 litres d'eau à 38°C, on peut envisager de loger l'échangeur avec ses portions d'échange, ses vannes trois voies et les moyens de chauffage dans un cube de 40 centimètres de côté.

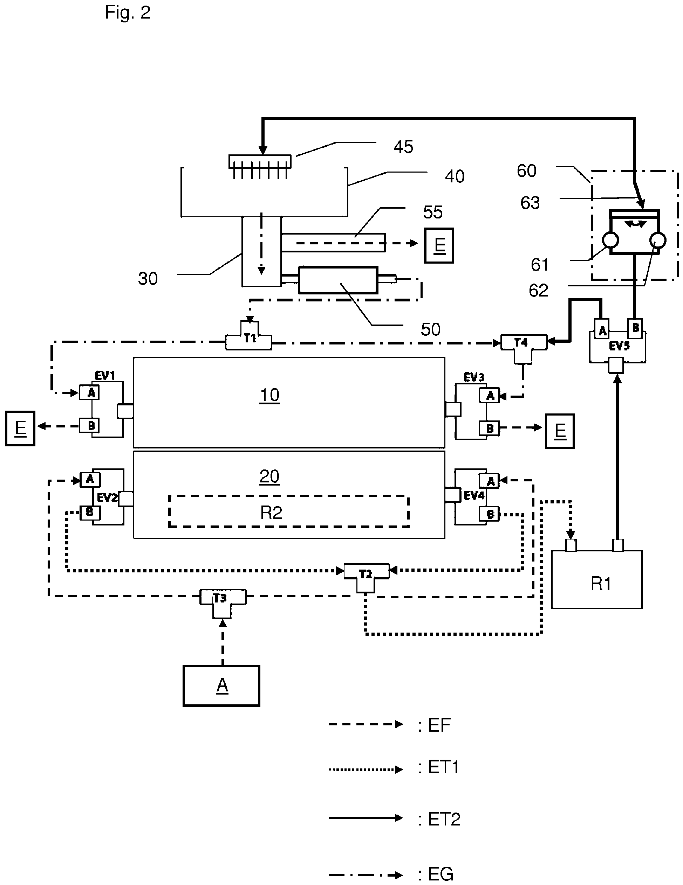

La figure 2 représente une variante du dispositif schématisé à la figure 1. Seul un mitigeur 60 a été ajouté entre la vanne EV5 et la pomme de douche 45.

Seul le fonctionnement du mitigeur 60 sera décrit, le reste étant identique à la figure 1. Le mitigeur 60 est ajouté pour apporter à l'utilisateur une interface de commande mécanique connue et pratique. Le mitigeur 60 comprend deux entrées avec chacune un débitmètre 61 et 62, ainsi qu'un levier de commande 63 qui permet de faire passer le flux d'eau en sortie de la portion d'échange eau propre dans l'une ou l'autre des entrées du mitigeur. On peut assigner à l'entrée ayant le débitmètre 61 la fonction "eau chaude", et à l'entrée ayant le débitmètre 62 la fonction "eau froide".

L'invention consiste à mesurer le débit qui passe dans chaque entrée, et à asservir la puissance de chauffage de la résistance R1 au ratio des débits dans chaque entrée du mitigeur. Ainsi, si l'utilisateur décide de mettre le mitigeur en position eau chaude et diriger le levier de sorte à faire passer tout le débit par le débitmètre 61, ce dernier le détectera et alors la résistance de chauffage R1 sera commandée à pleine puissance, pour chauffer l'eau au maximum. Par contre, si l'utilisateur décide de positionner le levier 63 de sorte à faire passer tout le flux dans le débitmètre 62, alors ce dernier le détectera (ou le débitmètre 61 détectera 0% de passage), et la résistance R1 sera mise hors tension pour ne pas chauffer davantage l'eau distribuée.

Entre ces deux positions extrêmes, l'utilisateur peut positionner le levier 63 n'importe où, et le chauffage sera calculé et effectué dans la même proportion que le ratio des débit passant dans les débitmètres 61 et 62. En d'autres termes, l'ajustement de la température finale est effectué non pas en mélangeant de l'eau froide et de l'eau chaude, mais sur la base d'une mesure de débits réglés mécaniquement par l'utilisateur, pour ajuster une puissance de chauffe. On peut également utiliser ces valeurs de débits demandés pour piloter la vitesse d'évacuation de la pompe 50.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un échangeur eau-eau à plaques, on peut envisager d'utiliser un échangeur à tubes, à tubes en U, à faisceau tubulaire horizontal ou vertical, en spirale ou à bloc.

## Revendications

1. Echangeur de chaleur du type eau-eau comprenant :
- une portion d'échange eau grise (10) agencée pour être connectée en amont à une bonde (30) de récupération d'eaux usées sanitaires, et en aval à une conduite d'évacuation (E),
- une portion d'échange eau propre (20) agencée pour être connectée en amont à un réseau d'alimentation en eau froide, et en aval à un robinet de distribution,
l'échangeur de chaleur étant agencé pour effectuer un transfert de chaleur entre la portion d'échange eau grise (10) et la portion d'échange eau propre (20) lors d'une distribution d'eau provoquée par une ouverture du robinet de distribution, et chauffer ainsi une eau d'alimentation à une première température,
l'échangeur de chaleur comprenant des premiers moyens de chauffage agencés pour compléter le chauffage de l'eau d'alimentation simultanément à la distribution d'eau, pour chauffer l'eau d'alimentation à une deuxième température supérieure à la première température,
l'échangeur de chaleur comprenant des deuxièmes moyens de chauffage agencés pour maintenir, pendant une période sans distribution d'eau, la portion d'échange eau propre (20) et l'eau qui y est contenue à une température au moins égale ou supérieure à la première température, **caractérisé en ce que** les premiers moyens de chauffage sont une résistance électrique (R1) agencée pour produire une énergie d'au moins 3 kWh lorsqu'elle est alimentée avec un premier courant d'alimentation, et **en ce que** les deuxièmes moyens de chauffage sont implantés autour de la portion d'échange eau propre (20) ou comprennent en outre un potentiomètre relié en série avec la résistance électrique (R1), pour limiter le premier courant d'alimentation et faire produire une énergie d'au plus 30Wh à la résistance électrique (R1).

2. Echangeur de chaleur selon la revendication 1, **caractérisé en ce qu'**il comprend des moyens d'isolation thermiques agencés pour isoler thermiquement au moins la portion d'échange eau propre (20).

3. Echangeur de chaleur selon l'une des revendications précédentes, **caractérisé en ce qu'**il comprend une pompe (50) agencée pour accélérer de manière au moins temporaire un flux d'eau grise traversant la portion d'échange eau grise (10).

4. Echangeur de chaleur selon l'une des revendications précédentes, **caractérisé en ce qu'**il comprend des moyens de régulation de débit agencés pour réguler un débit d'évacuation d'eau grise hors de la portion d'échange eau grise (10) en fonction d'un débit d'entrée d'eau grise dans la portion d'échange eau grise (10).

5. Echangeur de chaleur selon l'une des revendications précédentes, **caractérisé en ce qu'**il comprend au moins une vanne agencée pour court-circuiter la portion d'échange eau grise (10) d'un flux d'eau grise froid, et diriger ce flux court-circuité directement depuis la bonde (30) vers la conduite d'évacuation.

6. Echangeur de chaleur selon l'une des revendications précédentes, **caractérisé en ce que** chaque portion d'échange (10, 20) présente deux extrémités,
**en ce que** l'échangeur comprend à chaque extrémité de chaque portion d'échange une vanne (EV1, EV2, EV3, EV4) dont une voie est connectée à l'extrémité de sa portion d'échange,
et **en ce que** deux autres voies de chaque vanne (EV1, EV2, EV3, EV4) d'une portion d'échange sont connectées au reste du circuit d'eau et aux deux autres voies de la vanne (EV1, EV2, EV3, EV4) de l'autre extrémité de la portion d'échange en question via des raccords en Té, pour pouvoir inverser les flux dans chaque portion d'échange.

7. Echangeur de chaleur selon l'une des revendications précédentes, **caractérisé en ce qu'**il comprend, en aval des premiers moyens de chauffage (R1), une vanne (EV5) agencée pour diriger un flux d'eau chaude vers le robinet de distribution ou vers la portion d'échange eau grise.

8. Echangeur de chaleur selon l'une des revendications précédentes, **caractérisé en ce qu'**il comprend des moyens de stockage de chaleur avec au moins un matériau à changement de phase.

9. Dispositif de distribution d'eau sanitaire comprenant :
- au moins un échangeur de chaleur selon l'une des revendications précédentes,
- un lavabo et/ou un bac de douche.

## Patentansprüche

1. Wärmetauscher vom Typ Wasser-Wasser, umfassend:
- einen Grauwasser-Austauschabschnitt (10), der ausgebildet ist, um vorgelagert mit einem Abflussloch (30) zur Rückgewinnung von Abwasser sanitärer Anlagen und nachgelagert mit einer Abflussleitung (E) verbunden zu sein,
- einen Reinwasser-Austauschabschnitt (20), der ausgebildet ist, um vorgelagert mit einem Kaltwasser-Versorgungsnetz und nachgelagert mit einem Verteilerhahn verbunden zu sein,
wobei der Wärmetauscher ausgebildet ist, um eine Wärmeübertragung zwischen dem Grauwasser-Austauschabschnitt (10) und dem Reinwasser-Austauschabschnitt (20) bei einer Wasserverteilung durchzuführen, die von einem Öffnen des Verteilerhahns verursacht wurde, und somit ein Versorgungswasser auf eine erste Temperatur zu erwärmen,
wobei der Wärmetauscher erste Heizmittel umfasst, die ausgebildet sind, um das Heizen des Versorgungswassers gleichzeitig mit der Wasserverteilung zu ergänzen, um das Versorgungswasser auf eine zweite Temperatur über der ersten Temperatur zu erhitzen,
wobei der Wärmetauscher zweite Heizmittel umfasst, die ausgebildet sind, um während eines Zeitraums ohne Wasserverteilung den Reinwasser-Austauschabschnitt (20) und das dort enthaltene Wasser auf einer Temperatur zu halten, die mindestens gleich der oder höher als die erste Temperatur ist,
**dadurch gekennzeichnet, dass** die ersten Heizmittel ein elektrischer Widerstand (R1) sind, der ausgebildet ist, um eine Energie von mindestens 3 kWh zu erzeugen, wenn er mit einem ersten Versorgungsstrom versorgt wird, und dass die zweiten Heizmittel um den Reinwasser-Austauschabschnitt (20) eingerichtet sind oder ferner ein Potentiometer umfassen, das mit dem elektrischen Widerstand (R1) in Reihe verbunden ist, um den ersten Versorgungsstrom zu begrenzen und die Erzeugung einer Energie von höchstens 30 Wh durch den elektrischen Widerstand (R1) zu veranlassen.

2. Wärmetauscher nach Anspruch 1, **dadurch gekennzeichnet, dass** er Wärmeisolationsmittel umfasst, die ausgebildet sind, um mindestens den Reinwasser-Austauschabschnitt (20) thermisch zu isolieren.

3. Wärmetauscher nach einem der vorangehenden Ansprüche, **dadurch gekennzeichnet, dass** er eine Pumpe (50) umfasst, die ausgebildet ist, um mindestens zeitweilig einen Grauwasserstrom zu beschleunigen, der den Grauwasser-Austauschabschnitt (10) durchquert.

4. Wärmetauscher nach einem der vorangehenden Ansprüche, **dadurch gekennzeichnet, dass** er Durchfluss-Regulationsmittel umfasst, die ausgebildet sind, um einen Grauwasser-Ableitungsdurchfluss aus dem Grauwasser-Austauschabschnitt (10) in Abhängigkeit vom Grauwasser-Einleitungsdurchfluss in den Grauwasser-Austauschabschnitt (10) zu regulieren.

5. Wärmetauscher nach einem der vorangehenden Ansprüche, **dadurch gekennzeichnet, dass** er mindestens ein Ventil umfasst, das ausgebildet ist, um den Grauwasser-Austauschabschnitt (10) mit einem kalten Grauwasserstrom kurzzuschließen und diesen kurzgeschlossenen Strom direkt ab dem Abflussloch (30) zu der Abflussleitung zu leiten.

6. Wärmetauscher nach einem der vorangehenden Ansprüche, **dadurch gekennzeichnet, dass** jeder Austauschabschnitt (10, 20) zwei Enden aufweist,
dass der Tauscher an jedem Ende jedes Austauschabschnitts ein Ventil (EV1, EV2, EV3, EV4) umfasst, von dem ein Weg mit dem Ende seines Austauschabschnitts verbunden ist,
dass die anderen Wege jedes Ventils (EV1, EV2, EV3, EV4) eines Austauschabschnitt mit dem Rest des Wasserkreislaufs verbunden sind und mit den zwei anderen Wegen des Ventils (EV1, EV2, EV3, EV4) des anderen Endes des fraglichen Austauschabschnitts über T-Verbinder, um die Ströme in jedem Austauschabschnitt umkehren zu können.

7. Wärmetauscher nach einem der vorangehenden Ansprüche, **dadurch gekennzeichnet, dass** er, den ersten Heizmitteln (R1) nachgelagert, ein Ventil (EV5) umfasst, das ausgebildet ist, um einen Warmwasserstrom zum Verteilerhahn oder zum Grauwasser-Austauschabschnitt zu lenken.

8. Wärmetauscher nach einem der vorangehenden Ansprüche, **dadurch gekennzeichnet, dass** er Wärmespeichermittel mit mindestens einem Phasenwechselmaterial umfasst.

9. Sanitärwasserverteilungsvorrichtung, umfassend:
- mindestens einen Wärmetauscher nach einem der vorangehenden Ansprüche,
- ein Waschbecken und/oder eine Duschtasse.

## Claims

1. A water-water type heat exchanger comprising:
- a gray water exchange portion (10) arranged to be connected, upstream, to a drain (30) for recovering sanitary wastewater and, downstream, to a discharge duct (E),
- a clean water exchange portion (20) arranged to be connected, upstream, to a cold water supply network and, downstream, to a distribution tap,
the heat exchanger being arranged to carry out heat transfer between the gray water exchange portion (10) and the clean water exchange portion (20) during a water distribution caused by an opening of the distribution tap, and thus heat a supply water to a first temperature,
the heat exchanger comprising first heating means arranged to complete the heating of the supply water simultaneously with the water distribution, to heat the supply water to a second temperature higher than the first temperature,
the heat exchanger comprising second heating means arranged to maintain, over a period without water distribution, the clean water exchange portion (20) and the water contained therein to a temperature at least equal to or higher than the first temperature,
**characterized in that** the first heating means are an electric resistor (R1) arranged to produce an energy of at least 3 kWh when it is supplied with a first supply current, and **in that** the second heating means are implanted around the clean water exchange portion (20) or further comprise a potentiometer connected in series with the electrical resistor (R1) to limit the first supply current and make the electric resistor (R1) produce an energy of at most 30Wh.

2. The heat exchanger according to claim 1, **characterized in that** it comprises thermal insulation means arranged to thermally insulate at least the clean water exchange portion (20).

3. The heat exchanger according to any of the preceding claims, **characterized in that** it comprises a pump (50) arranged to accelerate at least temporarily a flow of gray water passing through the gray water exchange portion (10).

4. The heat exchanger according to any of the preceding claims, **characterized in that** it comprises flow rate regulation means arranged to regulate a gray water discharge flow rate outside the gray water exchange portion (10) based on a flow rate of gray water input in the gray water exchange portion (10).

5. The heat exchanger according to any of the preceding claims, **characterized in that** it comprises at least one valve arranged to short-circuit the gray water exchange portion (10) of a cold gray water flow, and direct this short-circuited flow directly from the drain (30) toward the discharge duct.

6. The heat exchanger according to any of the preceding claims, **characterized in that** each exchange portion (10, 20) has two ends,
**in that** the exchanger comprises at each end of each exchange portion a valve (EV1, EV2, EV3, EV4) one channel of which is connected to the end of its exchange portion,
and **in that** two other channels of each valve (EV1, EV2, EV3, EV4) of an exchange portion are connected to the rest of the water circuit and to the two other channels of the valve (EV1, EV2, EV3, EV4) of the other end of the exchange portion in question via T-fittings, to be able to reverse the flows in each exchange portion.

7. The heat exchanger according to any of the preceding claims, **characterized in that** it comprises, downstream of the first heating means (R1), a valve (EV5) arranged to direct a hot water flow toward the distribution tap or toward the gray water exchange portion.

8. The heat exchanger according to any of the preceding claims, **characterized in that** it comprises heat storage means with at least one phase-change material.

9. A sanitary water distribution device comprising:
- at least one heat exchanger according to any of the preceding claims,
- a sink and/or a shower tray.
